Europäisches Patentamt

(19) European Patent Office

Office européen des brevets

(11) Numéro de publication: **0 161 168**
**B1**

(12) ## FASCICULE DE BREVET EUROPÉEN

(45) Date de publication du fascicule du brevet:
12.08.87

(51) Int. Cl.⁴: **B 60 S 1/24**

(21) Numéro de dépôt: **85400714.3**

(22) Date de dépôt: **10.04.85**

(54) Dispositif d'embiellage, du type quadrilatere articule en croix, notamment pour essuie-glace.

(30) Priorité: 16.04.84 FR 8405993

(43) Date de publication de la demande:
13.11.85 Bulletin 85/46

(45) Mention de la délivrance du brevet:
12.08.87 Bulletin 87/33

(84) Etats contractants désignés:
DE IT

(56) Documents cité:
DE-B-1 164 858
GB-A-843 903

(73) Titulaire: **EQUIPEMENTS AUTOMOBILES MARCHAL, 21- 27 boulevard Gambetta, F-92130 Issy les Moulineaux (FR)**

(72) Inventeur: **Auzolat, Jean, 239, Boulevard Péreire, F-75017 Paris (FR)**

(74) Mandataire: **Peuscet, Jacques, Cabinet Peuscet 68, rue d'Hauteville, F-75010 Paris (FR)**

EP 0 161 168 B1

## Description

L'invention est relative à un dispositif d'embiellage, du type quadrilatère articulé en croix, permettant, en particulier, de transformer un mouvement alternatif sensiblement rectiligne d'une tige en un mouvement alternatif rotatif d'un arbre, notamment pour essuie-glace, comprenant deux bielles qui se croisent, articulées, à une de leurs extrémités, sur la tige, et à leur autre extrémité sur une pièce, formant levier, solidaire en rotation de l'arbre.

Un tel dispositif d'embiellage, connu également sous le nom d'embiellage en croix de Tschebyscheff permet d'obtenir des résultats intéressants, notamment dans le cas des essuie-glaces. Par exemple, le brevet d'Allemagne Fédérale DE-B-1 164 858 (correspondant au préamblue de la revendication 1) prévoit l'utilisation d'un embiellage de ce type pour assurer un balayage croisé, sans chevauchement, de deux balais d'essuie-glace.

Un tel embiellage permet en outre d'effectuer une sorte d'amplification de l'angle de balayage; en effet, avec un tel dispositif on peut atteindre des angles de balayage élevés en réduisant les risques d'arc-boutement ou de mouvement aléatoire qui apparaîtraient avec un dispositif d'embiellage simple ne comportant pas les bielles croisées.

Toutefois, en raison de la multiplicité des pièces et des articulations intervenant dans un tel dispositif d'embiellage, des inconvénients non négligeables existent. La superposition des pièces et le décalage des axes d'articulation entraînent des sollicitations mécaniques relativement importantes des pièces composant ce dispositif. Il est donc nécessaire de prévoir des pièces et des articulations suffisamment résistantes pour supporter ces sollicitations mécaniques. Il en résulte très souvent un appareillage lourd et coûteux en raison des épaisseurs relativement importantes des pièces.

L'invention a pur but, surtout, de fournir un dispositif d'embiellage du type défini précédemment qui réponde mieux que jusqu'à présent aux diverses exigences de la pratique et qui, notamment, soit d'une construction plus légère et plus économique tout en assurant un fonctionnement satisfaisant.

Selon l'invention, un dispositif d'embiellage, du type quadrilatère articulé en croix, pour transformer un mouvement alternatif sensiblement rectiligne d'une tige, en un mouvement alternatif rotatif d'un arbre, notamment pour essuie-glace, comprenant deux bielles qui se croisent, articulées, à une de leurs extrémités, sur la tige, et à leur autre extrémité sur une pièce, formant levier, solidaire en rotation de l'arbre, est caractérisé par le fait qu'une des bielles au moins est réalisée, sous forme d'étrier, en deux éléments sensiblement symétriques par rapport au plan moyen de cette bielle et écartés l'un de l'autre suivant une direction perpendiculaire à ce plan moyen, et que l'autre bielle passe entre les deux éléments de la première bielle, le plan moyen de la deuxième bielle étant confondu avec celui de la première.

Une telle disposition permet de ramener les efforts dans le même plan, et de supprimer ou de réduire considérablement les efforts de flexion dûs à un déport transversal des efforts de traction ou de compression.

La susdite pièce, formant levier, dans la zone de son articulation avec chacune des bielles, comprend avantageusement deux flasques écartés l'un de l'autre, de part et d'autre du plan moyen du levier, ces flasques définissant entre eux un espace propre à recevoir les extrémités de chacune des bielles destinées à être articulées sur le levier, lesdites extrémités étant enserrées entre les flasques du levier, et le plan moyen de ce levier et dudit espace étant confondu avec celui des bielles.

La tige, au moins dans sa région destinée à être articulée sur les extrémités desdites bielles, comporte deux branches écartées l'une de l'autre, de part et d'autre du plan moyen de la tige, ces branches définissant entre elles un espace propre à recevoir l'extrémité de chacune des bielles destinée à être articulée sur la tige, le plan moyen de cet espace étant confondu avec celui des bielles et celui de la tige.

La deuxième bielle peut également être réalisée en deux éléments, notamment jointifs.

Les éléments de chacune des bielles peuvent être réalisés à l'aide de pièces découpées dans de la tôle, ou analogue, ces pièces étant munies de trous pour le passage des axes d'articulation respectivement sur le levier et sur la tige.

Les pièces élémentaires pour la réalisation de chaque bielle sont avantageusement identiques, notamment en arc de cercle.

Chaque pièce élémentaire d'une bielle comporte, de préférence, autour du trou de passage de l'axe, un collet, notamment matricé, faisant saillie suivant une direction perpendiculaire au plan de la pièce élémentaire. Avantageusement, la saillie du collet est au moins égale à l'épaisseur de la pièce élémentaire et la première bielle est réalisée en disposant les deux pièces élémentaires de telle sorte que les collets viennent en appui l'un contre l'autre et maintiennent écartées ces deux pièces élémentaires en déterminant, entre elles, un espace suffisant pour le passage de la deuxième bielle qui est réalisée en appliquant les deux pièces élémentaires l'une contre l'autre de telle sorte que les collets soient tournés en sens opposés.

La pièce formant levier peut être réalisée en deux pièces élémentaires découpées dans de la tôle, une bordure de chaque pièce élémentaire étant déportée transversalement de manière à constituer le susdit flasque.

Des rondelles élastiques sont disposées entre les bielles et les parois du levier ou des pattes de la tige pour supprimer tout jeu latéral au niveau des articulations. Ces rondelles élastiques peuvent comporter des parties recourbées pour être accrochées sur le levier ou sur la tige, notamment dans des fenêtres prévues à cet effet, ou en bordure.

Les axes d'articulation peuvent être entourées de manchons en matière plastique ou analogue destinées à supprimer tout jeu radial entre l'axe et l'alésage recevant cet axe.

L'invention consiste, mises à part les dispositions exposées ci-dessus, en certaines autres dispositions dont il sera plus explicitement question ci-après à propos d'un mode de réalisation particulier décrit avec référence aux dessins ci-annexés mais qui n'est nullement limitatif.

La figure 1, de ces dessins, est une vue en élévation d''un dispositif d'embiellage, pour essuie-glace d'automobile, conforme à l'invention.

La figure 2 est une vue en plan du dispositif de la figure 1.

La figure 3 est une vue en plan de ce même dispositif pour une position angulaire différente de la pièce formant levier et de l'arbre lié en rotation à cette pièce.

La figure 4 est une coupe suivant IV-IV, figure 1, à plus grande échelle, d'une articulation entre une bielle et le levier.

La figure 5 est une coupe suivant V-V figure 1, à plus grande échelle, d'une articulation entre une bielle et les branches de la tige.

La figure 6, enfin, est une vue en perspective d'une rondelle élastique.

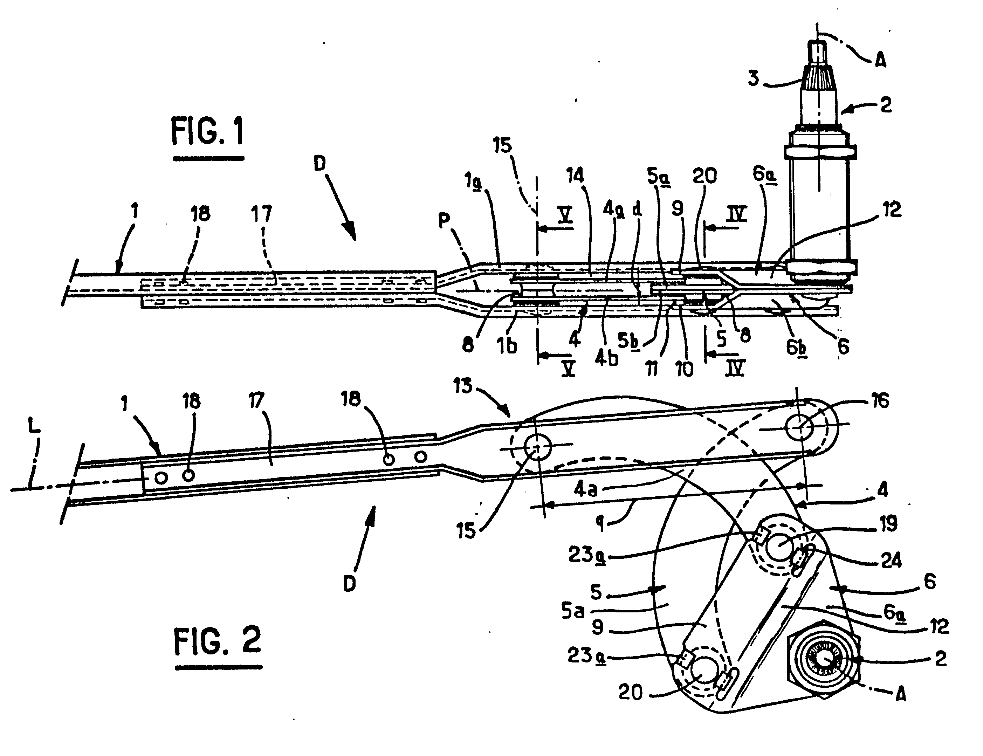

En se reportant aux dessins, notamment aux figures 1 et 2, on peut voir un dispositif d'embiellage D du type quadrilatère articulé, en croix, pour transformer un mouvement alternatif sensiblement rectiligne d'une tige 1 en un mouvement alternatif rotatif, d'un arbre 2, autour de son axe géométrique A. Le mouvement alternatif rectiligne de la tige 1 s'effectue suivant une direction sensiblement constante parallèle à la direction longitudinale moyenne L (figure 2) de la tige. Ce mouvement alternatif rectiligne peut être communiqué à la tige 1 par tout système approprié, notamment un système bielle manivelle classique entraîné par un moteur tournant dans un sens déterminé.

L'arbre 2 est destiné à entrainer un essuie-glace et comporte une partie tronconique 3 munie de cannelures, propre à coopérer avec une partie tronconique correspondante d'une tête d'assemblage d'essuie-glace non représentée.

Le dispositif D comprend deux bielles 4, 5 qui se croisent, articulées, à une de leurs extrémités, sur la tige 1 et, à leur autre extrémité, sur une pièce formant levier 6 solidaire en rotation de l'arbre 2.

La bielle 4 est réalisée, sous forme d'étrier, en deux éléments 4a, 4b parallèles, symétriques par rapport au plan moyen P (figure 1) de la bielle et écartés l'un de l'autre d'une distance $d$ (figure 1) suivant une direction perpendiculaire à ce plan moyen P.

L'autre bielle 5 passe entre les deux éléments 4a, 4b de la première bielle 4, le plan moyen de la deuxième bielle 5 étant confondu avec le plan moyen P de la première bielle 4.

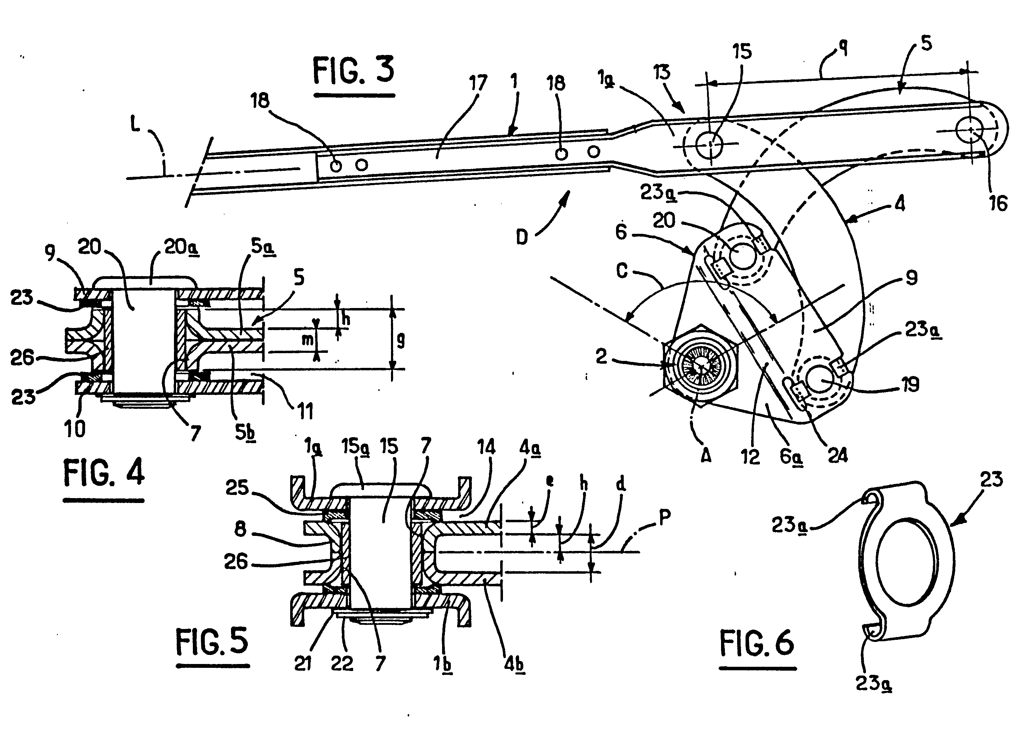

La deuxième bielle 5 est également réalisée en deux éléments 5a, 5b, jointifs comme visible sur la figure 1 et sur la figure 4. Chacun des éléments des bielles 4 et 5 est réalisé sous forme d'une pièce élémentaire découpée dans de la tôle, ou analogue, ces pièces étant munies de trous tels que 7 pour le passage d'axes d'articulation respectivement sur le levier 6 et sur la tige 1.

Comme visible sur les figures 2 et 3, les pièces élémentaires 4a, 4b et 5a, 5b pour la réalisation de chaque bielle sont identiques et ont une forme en arc de cercle ou en croissant, ces pièces étant des pièces plates. Les deux pièces plates 5a 5b sont en appui l'une contre l'autre par une de leurs faces.

Chaque pièce élémentaire 4a, 4b ou 5a, 5b d'une bielle comporte, autour du trou de passage 7 pour un axe, un collet 8, notamment matricé, faisant saillie suivant une direction perpendiculaire au plan de la pièce élémentaire considérée. La saille $h$ (figure 5) du collet par rapport à la surface de la pièce élémentaire (par exemple 4a) est au moins égale à l'épaisseur e de cette pièce. La première bielle 4 est réalisée en disposant les deux pièces élémentaires 4a, 4b, comme visible sur les figures 1 et 5, de telle sorte que les collets 8 viennent en appui l'un contre l'autre et maintiennent écartées les deux pièces élémentaires 4a, 4b en déterminant, entre elles, un espace ayant la dimension $d = 2h$ suffisante pour le passage de la deuxième bielle 5.

Cette deuxième bielle 5 est réalisée en appliquant les deux pièces élémentaires 5a, 5b l'une contre l'autre (voir figure 4) de telle sorte que les collets 8 soient tournés en sens opposés. On peut remarquer que la dimension transversale hors tout g (figure 4) de la bielle 5 au niveau des collets 8 est supérieure à la dimension $d$ mais que, par contre, l'épaisseur $m$ (figure 4) = 2e, est inférieure à la dimension $d$. La bielle 5 pourra être introduite, entre les éléments 4a, 4b, de la bielle 4 au moment de l'assemblage de ces éléments; la bielle 5 ainsi mise en place ne pourra s'échapper puisqu'à ses deux extrémités la superposition des collets 8 forme une protubérance de dimension transversale g qui ne peut passer entre les éléments 4a, 4b.

Le levier 6, dans la zone de son articulation avec chacune des bielles 4 et 5, comprend deux flasques 9, 10 (figure 1) écartés l'un de l'autre suivant la direction perpendiculaire au plan moyen du levier 6, lequel plan moyen est confondu avec le plan moyen P. Les flasques 9 et 10 définissent entre eux un espace 11 propre à recevoir les extrémités de chacune des bielles 4 et 5, destinées à être articulées sur le levier, comme visible sur les figures 2 et 3. Les extrémités des bielles, munies des trous 7 pour les articulations, sont donc enserrées entre les flasques 9, 10 du levier 6. Ce levier est avantageusement réalisé en deux pièces élémentaires 6a, 6b, sensiblement en forme de triangle isocèle (figures 2 et 3) découpées dans de la tôle; la bordure de chaque pièce élémentaire 6a, 6b, correspondant à la base du triangle isocèle, est déportée transversalement, de manière à constituer le susdit flasque 9, 10. Ces flasques 9 et 10 sont parallèles au plan moyen P. Les pièces élémentaires 6a, 6b sont en appui l'une contre l'autre par le reste de leur surface; une zone de transition formée par une fraction de plan incliné tel que 12 (figures 1 et 2) assure le raccordement entre chaque flasque 9, 10 et le reste de la pièce élémentaire 6a, 6b. La pièce 6 peut comporter, à son sommet éloigné des flasques 9, 10, un trou servant de passage à une vis ou analogue pour le blocage en rotation du levier 6 sur l'arbre 2.

La tige 1, dans sa région 13 destinée à être articulée sur une extrémité desdites bielles 4, 5 comporte des branches 1a, 1b (figure 1) écartées symétriquement l'une de l'autre par rapport au plan moyen de la tige 1, ce plan moyen étant confondu avec le plan P. Les branches 1a, 1b définissent, entre elles, un espace 14 propre à recevoir l'extrémité de chacune des bielles 4 et 5 destinée à être articulée sur la tige 1. Les branches 1a, 1b, sont percées de trous en regard, destinés à recevoir des axes d'articulation 15, 16 (figures 2 et 5) pour les extrémités des bielles 4 et 5. La distance entre les centres des trous recevant les axes 15 et 16 a été désignée par q sur la figure 2. Les pattes 1a, 1b sont fixées, sur la tige 1 proprement dite, au niveau d'un prolongement tel que 17, déporté vers le plan moyen p et maintenu sur la tige 1 par des vis, rivets ou analogues 18. Des trous en regard l'un de l'autre, sont également prévus vers les extrémités des flasques 9 et 10, pour recevoir des axes d'articulation 19 et 20 (figures 2 et 4) pour les autres extrémités des bielles 4 et 5.

Comme visible sur les figures 2 et 3, l'axe trouve dans la concavité de l'autre biellette 5; il en est de même pour l'axe d'articulation 20 de la biellette 5 qui se trouve dans la concavité de la biellette 4.

Chaque axe tel que 15 ou 20 (figures 4 et 5) comporte, d'un côté, une tête applatie 15a ou 20a de plus fort diamètre qui sert de butée axiale, pour un sens de déplacement; à son autre extrémité, l'arbre est arrêté, dans le sens contraire, à l'aide d'une rondelle telle que 21 maintenue axialement par une bague élastique fendue 22 ancrée dans une gorge périphérique prévue sur ledit axe.

Des rondelles élastiques telles que 23 (figures 4 et 6) sont disposées entre les bielles 4 et 5, au niveau de leur collet, et les parois des flasques 9 et 10 du levier 6 pour supprimer tout jeu latéral au niveau des articulations. Ces rondelles élastiques peuvent comporter des parties recourbées 23a, notamment diamétralement opposées (figure 6) propres à être accrochées sur le levier 6, en bordure de celui-ci et dans des fenêtres 24 (figures 2 et 3) prévues à cet effet. D'autres rondelles élastiques 25 (figure 5) dépourvues de crochet, peuvent être prévues entre les parois internes des branches 1a, 1b et les bielles 4 et 5 au niveau des collets 8, également pour supprimer tout jeu latéral au niveau des articulations utilisant les axes 15 et 16.

Des manchons 26 (figures 4 et 5) en matière plastique ou analogue, sont montés autour des axes 15, 16 et 19, pour supprimer tout jeu radial entre lesdits axes et l'alésage déterminé par les collets 8 des pièces élémentaires constituant les bielles 4 et 5.

Il n'apparaît pas utile d'insister sur le fonctionnement du dispositif d'embiellage selon l'invention. On rappelle simplement qu'un mouvement alternatif rectiligne de la tige 1 est transformé en un mouvement alternatif rotatif de l'axe 2. La figure 2 représente la position extrême de la tige 1 vers la gauche, et la position angulaire extrême du levier 6 et de l'axe 2 correspondant. La figure 3 représente la position extrême de la tige 1 vers la droite et la position angulaire correspondante du levier 6 de l'axe 2 qui ont tourné d'un angle C d'environ 100° par rapport à la position de la figure 2.

L'agencement du dispositif conforme à l'invention permet de ramener tous les efforts de traction ou de compression dans le même plan P de telle sorte que les moments de flexion sur les articulations sont supprimés. Il en résulte un fonctionnement particulièrement doux de ce dispositif d'embiellage, ainsi qu'une meilleure résistance à l'usure.

La masse des pièces élémentaires utilisées peut être réduite du fait que ces pièces sont soumises à des sollicitations mécaniques réduites. Ces pièces peuvent être réalisées par découpage de tôle relativement mince.

**Revendications**

1. Dispositif d'embiellage, du type quadrilatère articulé en croix, permettant, en particulier, de transformer un mouvement alternatif sensiblement rectiligne d'une tige (1) en un mouvement alternatif rotatif d'un arbre (2), notamment pour essuie-glace, comprenant deux bielles (4, 5) qui se croisent, articulées, à une de leurs extrémités, sur la tige (1) et, à leur autre extrémité, sur une pièce (6) formant levier, solidaire en rotation de l'arbre (2), caractérisé par le fait qu'une des bielles (4) au moins est réalisée sous forme d'étrier, en deux éléments (4a, 4b) sensiblement symétriques par rapport au plan moyen (P) de cette bielle, et écartés l'un de l'autre suivant une direction perpendiculaire à ce plan moyen, et que l'autre bielle (5) passe entre les deux éléments (4a, 4b) de la première bielle (4), le plan moyen de la deuxième bielle (5) étant confondu avec celui (P) de la première (4).

2. Dispositif selon la revendication 1, caractérisé par le fait que le levier (6), dans la zone de son articulation avec chacune des bielles (4, 5) comprend deux flasques (9, 10) écartés l'un de l'autre, de part et d'autre du plan moyen du levier (6), ces flasques (9, 10) définissant entre eux un espace (11) propre à recevoir les extrémités de chacune des bielles destinées à être articulées sur le levier (6), lesdites extrémités étant enserrées entre les flasques (9, 10) du levier et le plan moyen de ce levier (6) et dudit espace étant confondu avec celui (P) des bielles.

3. Dispositif selon la revendication 1 ou 2, caractérisé par le fait que la tige (1) au moins dans sa région (13) destinée à être articulée sur les extrémités desdites bielles (4, 5) comportent deux branches (1a, 1b) écartées l'une de l'autre de part et d'autre du plan moyen de la tige, ces branches (1a, 1b) définissant entre elles un espace (14) propre à recevoir l'extrémité de chacune des bielles (4, 5) destinée à être articulée sur la tige (1), le plan moyen de cet espace (14) étant confondu avec celui (P) des bielles et celui de la tige (1).

4. Dispositif selon l'une quelconque des revendications précédentes caractérisé par le fait que la deuxième bielle (5) est réalisée en deux éléments (5a, 5b), notamment jointifs.

5. Dispositif selon l'une quelconque des revendications précédentes caractérisé par le fait que chacune des bielles (4, 5) est réalisée à l'aide de pièces (4a, 4b; 5a, 5b) découpées dans de la tôle, ou analogue, ces pièces étant munies de trous (7) pour le passage d'axes d'articulation (15, 16; 19, 20) respectivement sur la tige (1) et le levier (6).

6. Dispositif selon la revendication 5, caractérisé par le fait que les pièces élémentaires (4a, 5a, 5b) pour la réalisation de chaque bielle sont identiques, notamment en arc de cercle.

7. Dispositif selon la revendication 5 ou 6, caractérisé par le fait que chaque pièce élémentaire (4a, 4b; 5a, 5b) d'une bielle comporte, autour du trou de passage (7) d'un axe, un collet (8), notamment matricé, faisant saillie suivant une direction prependiculaire au plan de la pièce élémentaire, la saillie (h) du collet étant au moins égale à l'épaisseur (e) de la pièce élémentaire, et par le fait que la première bielle (4) est réalisée en disposant les deux pièces élémentaires (4a, 4b) de telle sorte que les collets (8) viennent en appui l'un contre l'autre et maintiennent écartées ces deux pièces élémentaires (4a, 4b) en déterminant entre elles un espace (d) suffisant pour le passage de la deuxième bielle (5) qui est réalisée en appliquant les deux pièces élémentaires (5a, 5b) l'une contre l'autre de telle sorte que les collets (8) soient tournés en sens opposés.

8. Dispositif selon l'une quelconque des revendications précédentes caractérisé par le fait que le levier (6) est réalisé en deux pièces élémentaires (5a, 6b), découpées dans de la tôle, une bordure de chaque pièce élémentaire étant déportée transversalement de manière à constituer les susdits flasques (9, 10).

9. Dispositif selon l'une quelconque des revendications précédentes caractérisé par le fait que des rondelles élastiques (23, 25) sont disposées entre les collets (8) des bielles et les parois du levier (6) ou des branches (1a, 1b) de la tige pour supprimer tout jeu latéral au niveau des articulations, ces rondelles (23) pouvant être accrochées sur le levier (6), notamment dans des fenêtres (24) prévues à cet effet.

10. Dispositif selon l'une quelconque des revendications précédentes caractérisé par le fait que les axes d'articulation sont entourés de manchons (26), en matière plastique ou analogue, destinés à supprimer tout jeu radial entre l'axe et l'alésage déterminé par les collets (8).

**Patentansprüche**

1. Antriebseinrichtung in Form einer Viergelenkkette mit überkreuz angelenkten Lenkern, insbesondere für die Umwandlung einer im wesentlichen geradlienigen hin- und hergehenden Bewegung einer Stange (1) in eine hin- und hergehende Drehbewegung einer Welle (2), insbesondere für Scheibenwischer, mit zwei sich kreuzenden Lenkern (4, 5), welche mit einem ihrer Enden an der Stange (1) und mit dem anderen Ende an einem Hebelteil (6) angelenkt sind, das drehfest mit der Welle (2) verbunden ist, dadurch gekennzeichnet, daß einer der Lenker (4) als wenigstens dreiseitiger Bügel ausgebildet ist und zwei seiner Teile (4a, 4b) im wesentlichen symmetrisch zu der Mittelebene (P) des Bügels (4) und senkrecht zu der Mittelebene im Abstand voneinander angeordnet sind, und daß der andere Lenker (5) sich zwischen bei beiden Teilen (4a, 4b) des ersteren Lenkers (4) befindet, wobei die Mittelebene des zweiten Lenkers (5) mit der Mittelebene (P) des ersteren Lenkers (4) zusammenfällt.

2. Antriebseinrichtung nach Anspruch 1, dadurch gekennzeichnet, daß das Hebelteil (6) in dem Bereich der Gelenkverbindungen mit den Lenkern (4, 5) zwei Flansche (9, 10) aufweist, welche beidseitig der Mittelebene des Hebelteils (6) im Abstand voneinander angeordnet sind und einen Zwischenraum (11) einschließen, der die Enden der Lenker aufnimmt, die an dem Hebelteil (6) angreifen, wobei die Enden zwischen den Flanschen (9, 10) des Hebelteils eingeschlossen sind und die Mittelebene des Hebelteils (6) und des Zwischenraums gleich der (P) der Lenker ist.

3. Antriebseinrichtung nach Anspruch 1 oder 2, dadurch gekennzeichnet, daß die Stange (1) wenigstens in dem Bereich (13), in dem sich die Gelenkverbindungen mit den Enden der Lenker (4, 5) befinden, wenigstens zwei Schenkel (1a, 1b) aufweist, welche beidseitig der Mittelebene der Stange im Abstand voneinander angeordnet sind und einen Zwischenraum (14) zwischen sich einschließen, der die Enden der Lenker (4, 5) aufnimmt, die an der Stange (1) angreifen, wobei die Mittelebene des Zwischenraumes (14) gleich der (P) der Lenker und der Stange (1) ist.

4. Antriebseinrichtung nach einem der vorhergehenden Ansprüche, dadurch gekennzeichnet, daß der zweite Lenker (5) zweiteilig ausgebildet ist und seine beiden Teile (5a, 5b) vorzugsweise nebeneinander liegen.

5. Antriebseinrichtung nach einem der vorhergehenden Ansprüche, dadurch gekennzeichnet, daß jeder der Lenker (4, 5) mehrteilig (4a, 4b; 5a, 5b) ausgebildet ist und die aus Blech o. dgl. ausgeschnittenen Teile Ausnehmungen (7) für die Gelenkwellen (15, 16; 19, 20) der Stange (1) bzw. des Hebelteils (6) aufweisen.

6. Antriebseinrichtung nach Anspruch 5, dadurch gekennzeichnet, daß die Teile (4a, 4b; 5a, 5b) der Hebel jeweils gleich ausgebildet sind und vorzugsweise Kreisbogenform haben.

7. Antriebseinrichtung nach Anspruch 5 oder 6, dadurch gekennzeichnet, daß die Teile (4a, 4b; 5a, 5b) der Hebel um die Wellenausnehmung (7) angeordnete, vorzugsweise spanlos geformte Kragen (8) aufweisen, die senkrecht zur Ebene den Teile um eine Strecke (h) vorstehen, die wenigstens gleich der Stärke (e) der Teile ist, und daß die beiden Teile (4a, 4b) des ersten Lenkers (4) mit den Kragen (8) aneinanderstoßen und dadurch im Abstand voneinander gehalten sind und einen Zwischenraum (d) bilden, der die aufnahme des zweiten Lenkers (5) ermöglicht, dessen Teile (5a, 5b) so aneinanderliegen, daß die Kragen (8) entgegengesetzt gerichtet sind.

8. Antriebseinrichtung nach einem der vorhergehenden Ansprüche, dadurch gekennzeichnet, daß das Hebelteil (6) aus zwei aus Blech ausgeschnittenen Teilen (6a, 6b) besteht und jedes dieser Teile in Querrichtung angeordnete Vorsprünge besitzt, die Flansche (9, 10) bilden.

9. Antriebseinrichtung nach einem der vorhergehenden Ansprüche, dadurch gekennzeichnet, daß zwischen den Kragen (8) der Lenker und den Wandungen des Hebelteils (6) oder der Schenkel (1a, 1b) der Stange elastische Zwischenscheiben (23, 25) angeordnet sind, um das seitliche Spiel in der Schwenkebene zu beheben, und daß die Zwischenscheiben (23) an dem Hebelteil (6) angebracht sein können, vorzugsweise in hierfür vorgesehenen Fenstern (24).

10. Antriebseinrichtung nach einem der vorhergehenden Ansprüche, dadurch gekennzeichnet, daß um die Schwenkwellen Manschetten (26) aus Kunststoff o. dgl. angeordnet sind, um das radiale Spiel zwischen der Welle und der von den Kragen (8) gebildeten Bohrung zu beheben.

**Claims**

1. A linkage device of the cross-wiss articulated type making it in particular possible to transform a substantially rectilingar alternating motion of a rod (1) into an alternating rotary motion of a spindle (2), for windscreens in particular, comprising two crossing cranks (4, 5), articulated at one of their ends to the rod (1) and at their other end to a companent (6) forming a lever fixed for rotation with the spindle (2), characteriesd in that at least one of the cranks (4) is made in the form of a stirrup in two elements (4a,4b) substantially symmetrical in relation to the median plans (P) of this crank, and interspaced from each other along a direction perpendicular to this median plane and that the other crank (5) passes between the two elements (4a, 4b) of the first crank (4), the median plane of the second crank (5) being identical with that, (P), of the first (4).

2. A device according to claim 1, characterised in that the lever (6) comprises in the zone of its articulation with each one of the cranks (4, 5) two side plates (9, 10) interspaced from each other on either side of the median plane of the lever (6), these side plates (9, 10) defining between them a space (11) capable of accommodating the ends of each one of the cranks intended to be articulated to the lever (6), the said ends being gripped between the side plates (9, 10) of the lever and the median plane of this lever (6) and of the said space being identical with that, (P), of the cranks.

3. A device according to claim 1 or 2, characterised in that the rod (1) does, at least in its zone (13) intended to be articulated to the ends of the said cranks (4, 5), comprise two arms (1a, 1b), interspaced from each other on either side of the median plane of the rod, these arms (1a, 1b) defining between them a space (14) capable of accommodating the ends of each one of the cranks (4, 5) intended to be articulated to the rod (1), the median plane of this space (14) being identical with that, (P) of the cranks and that of the rod (1).

4. A device according to any one of the preceding claims, characterised in that the second crank (5) is made of two elements (5a 5b), which are, in particular, contiguous.

5. A device according to any one of the preceding claims, characterised in that each one of the cranks (4, 5) is made by means of components (4a, 4b, 5a, 5b) cut out of sheet metal or similar, these components being provided with holes (7) for the passing of articulation pins (15, 16; 19, 20) on the rod (1) and the lever (6) respectively.

6 A device according to claim 5, characterised in that the component elements (4a, 4b, 5a, 5b) for the making of each crank are identical and in circular arc shapes in particular.

7. A device according to claim 5 or 6, characterised in that each component element (4a, 4b, 5a, 5b) of one crank comprises around the passage hole (7) for one pin, a collar (8) being stamped out in particular, projecting along a direction perpendicular to the plane of the component element the projection (h) of the collar being at least equal to the thickness (e) of the component element and in that the first crank (4) is made by disposing the two component elements (4a, 4b) in such a way that the collars (8) come to bear against each other and keep these two component elements (4a, 4b interspaced from each other defining between them a space (d) which suffices for the passing of the second crank (5), which is made by applying the two component elements (5a, 5b) to each other in such a way that the collars (8) point in opposite directions.

8. A device according to any one of the preceding claims, characterised in that the lever (6) is made of two component elements (6a, 6b), cut out from sheet metal, one edge of each component element being carried over so as to constitute the two above mentioned side plates (9, 10).

9. A device according to any one of the preceding claims, characterised in that elastic washers (23, 25) are disposed between the collars (8) of the cranks and the sides of the lever (6) or the arms (1a, 1b) of the rod to eliminate any lateral play at the level of the articulations, these washers (23) being capable of fastening on the lever (6), in particular in the windows (24) provided for that purpose.

10. A device according to any one of the preceding claims, characterised in that the articulation pins are surrounded by sleeves (26) of a plastic or similar material, intended to eliminate any radial play between the pin and the hole definded by the collars (8).

FIG. 1

FIG. 2

0 161 168

FIG. 3

FIG. 4

FIG. 5

FIG. 6

0 161 168